# EUROPÄISCHE PATENTSCHRIFT

(11) **EP 3 770 416 B1**
(45) Veröffentlichungstag und Bekanntmachung des Hinweises auf die Patenterteilung: **16.10.2024**
(21) Anmeldenummer: 20178924.5
(22) Anmeldetag: 09.06.2020
(51) Int. Cl.: F02M 35/10, F16L 33/30, F16L 33/20, B29C 65/00

(54) **VERBINDUNGSANORDNUNG FÜR FLUIDLEITUNGEN**
CONNECTION ASSEMBLY FOR FLUID LINES
DISPOSITIF DE RACCORDEMENT POUR CONDUITES FLUIDIQUES

(30) Priorität: 24.07.2019 DE 102019210937
(43) Veröffentlichungstag der Anmeldung: 27.01.2021
(73) Patentinhaber: ContiTech Techno-Chemie GmbH, 61184 Karben (DE)
(72) Erfinder: Becker, Viktor, 30419 Hannover (DE); Kreidner, Harald, 30419 Hannover (DE)
(74) Vertreter: Continental Corporation

(56) Entgegenhaltungen:
- EP-A1- 3 404 249
- EP-A1- 3 404 305
- EP-A2- 0 212 883
- DE-A1- 102009 011 769
- DE-C1- 4 201 677
- US-A1- 2006 278 192

## Beschreibung

Die Erfindung betrifft eine Verbindungsanordnung für Fluidleitungen, aufweisend ein Ladeluftrohr und eine Stützhülse aus Kunststoff, wobei die Stützhülse speichenartige, radial nach außen weisende Stützrippen aufweist.

Ladeluftrohre werden aufgrund der einfachen Herstellbarkeit und des geringen Gewichts heute oft als Blasformteil ausgeführt. Dabei sind auch geringe Wandstärken erreichbar.

Problematisch sind diese geringen Wandstärken im Bereich der Anschlüsse, da die Festigkeit der Rohrwand meist nicht ausreicht, um weitere Fluidleitungen an das Rohr anzuschließen. Dies geschieht meist durch das Aufschieben eines Schlauches auf das Endstück des Ladeluftrohres und anschließender Verklemmung mit Spannhülsen oder Schellen. Ohne Verstärkung des Endes des Ladeluftrohres würde dieses bei der Verklemmung zusammengedrückt.

Die Endstücke sind daher meist mit einer metallischen Stützhülse verstärkt. Dies verursacht teilweise erheblichen Aufwand, da das Endstück des Ladeluftrohres auf ein definiertes Maß aufgespindelt werden muss, um die metallene Hülse in das Innere des Rohres einpressen zu können. Da das thermische Verhalten der Kunststoffe des Ladeluftrohres und des Metalles der Stützhülse unterschiedlich sind, muss die Hülse auch gegen ein Herausfallen aus dem Rohrende gesichert sein. Dazu kann beispielsweise der Kunststoff am Rohrende nochmals aufgeschmolzen und nach innen gedrückt werden. So entsteht eine Herausfallsperre.

Derartige Stützhülsen sind meist relativ schwer und wegen des unterschiedlichen Temperaturverhaltens nicht optimal einsetzbar.

In der DE 10 2017 208 444 A1 ist eine Stützhülse offenbart, die diesen Nachteil dadurch ausgleicht, dass die Stützhülse aus Kunststoff ausgebildet ist und Stützrippen aufweist, die für die nötige Steifigkeit und Festigkeit der Stützhülse sorgen. Die US 2006 278 192 A1 offenbart ein in ein Luftansaugrohr einsetzbares Drucklufthorn in Form eines Kegelstumpfes, der von einem flexiblen Bügel mit verstellbaren Durchmesser umgeben ist.

Aus dem EP 0 212 883 A2 ist ein weiteres Beispiel bekannt.

Da bei blasgeformten Rohren teilweise nicht unerhebliche Wandstärkenunterschiede auftreten können, ist es teilweise schwierig, eine solche Stützhülse in ein entsprechendes Rohrende einzuschieben und ggf. dort so festzulegen, dass sie nicht wieder herausfällt. Der Erfindung liegt die Aufgabe zugrunde, eine einfache und kostengünstige Verbindungsanordnung für Fluidleitungen zu schaffen, die eine sichere Montage fluidführender Bauteile ermöglicht.

Diese Aufgabe wird dadurch gelöst, dass die Stützrippen der Stützhülse an ihren radialen Außenenden federnde Stützbereiche aufweisen.

Federnde Stützbereiche sind aufgrund ihrer Elastizität der Geometrie eines Ladeluftrohr-Endes gut anpassbar. So können die federnden Stützbereiche beim Einstecken zusammengedrückt werden, so dass ein leichtes Einstecken möglich ist und können in ihrer vorgesehenen Position wieder Ausfedern, so dass ein sicheres Abstützen des Ladeluftrohres bei gleichzeitiger Sicherheit gegen Herausfallen gegeben ist. Erfindungsgemäß sind die federnden Stützbereiche als kreissegmentartig ausgebildete Federsegmente ausgebildet, wobei jedem Federsegment ein Stützrippenende zugeordnet ist und das Stützrippenende mittig an dem Federsegment angreift, so dass jedes Federsegment zwei Federarme ausbildet.

Die Federarme jedes Federsegmentes sind leicht herstellbar und in Ihrer Geometrie so vorbestimmbar, dass sie nahezu beliebigen Geometrieanforderungen in Zusammenhang mit blasgeformten Ladeluftrohr-Enden genügen können.

In einer Weiterbildung der Erfindung sind die kreissegmentartigen Federsegmente jeweils mit einem sekantenartigen geraden Stützfuß verstärkt, wobei jeder Stützfuß an jeweils einem Stützrippenende angeordnet ist und jeweils an den in Umfangsrichtung gesehenen Enden jeweils mit einem Federsegment verbunden ist, so dass zwischen Stützfuß und Federsegment ein in radialer Ausdehnung sich von Null bis zu einem vorbestimmten Scheitelwert ändernder Zwischenraum ausbildbar ist.

Durch diese Geometrie entstehen in radialer Richtung recht steife, tragfähige Traggebilde, die aber auch gute Federeigenschaften aufweisen, so dass eine derartig ausgebildete Stützhülse sowohl gut an die Geometrie der jeweiligen Ladeluftrohr-Enden anpassbar ist als auch eine hohe Stützwirkung gewährleistet.

In einer Weiterbildung der Erfindung ist an jedem Federsegment an jedem seiner in Umfangsrichtung gesehenen Enden ein nach radial Innen abgewinkeltes Endsegment vorbestimmter Länge ausgebildet.

Die Federsegmente werden in eingebautem Zustand der erfindungsgemäßen Stützhülse beim Belasten durch einen auf dem Ladeluftrohr angeordneten Spannring bestimmungsgemäß federnd radial nach Innen verformt. Dabei kann es wegen der damit einhergehenden Durchmesserverringerung dazu kommen, dass sich die Enden aneinander angrenzender Federelemente übereinander schieben und dabei eine unerwünschte Geometrie annehmen. Die nach Innen abgewinkelten Endsegmente verhindern dies, da sie aufgrund ihrer vorbestimmten Länge nach innen ragen und zwar aneinander stoßen, sich aber nicht übereinander schieben können.

In einer Weiterbildung ist die Stützhülse als Spritzgußteil hergestellt.

Das Spritzgießverfahren ist für Kunststoffteile der erfindungsgemäßen Form besonders gut geeignet

In einer Weiterbildung der Erfindung ist die Stützhülse aus verschiedenen Kunststoffarten ausgebildet.

Verschiedene Kunststoffarten ermöglichen, bei den einzelnen Komponenten der erfindungsgemäßen Stützhülsen verschiedene Festigkeiten zu erreichen.

In einer Weiterbildung der Erfindung sind die Stützrippen der Stützhülse aus einem gegenüber den federnden Stützbereichen höherfesten Kunststoff ausgebildet.

Durch einen höherfesten Kunststoff ist ein besonders sparsamer Materialeinsatz möglich. Die größere Sprödigkeit derartiger Werkstoffe sind dadurch, dass sie nur in den Stützrippe eingesetzt werden, nicht störend.

In einer Weiterbildung der Erfindung ist die Stützhülsen mittels des 3D-Druckes hergestellt.

Das 3D-Druckverfahren ermöglicht auf besonders einfache Weise den Einsatz verschiedener Kunststoffarten in einem Bauteil.

Anhand der Zeichnung wird ein Beispiel der Erfindung näher erläutert. Es zeigt
die Fig. 1 zeigt eine Stützhülse mit gleichmäßig verteilten Stützrippen und kreissegmentartig ausgebildeten Federsegmenten in unbelasteten Zustand,
die Fig. 2 eine Stützhülse mit gleichmäßig verteilten Stützrippen und Stützfüßen und kreissegmentartig ausgebildeten Federsegmenten mit nach Innen abgewinkelten Endsegmenten in unbelasteten Zustand und
die Fig. 3 die Stützhülse aus Fig. 2 in belastetem Zustand
jeweils in einer Draufsicht.

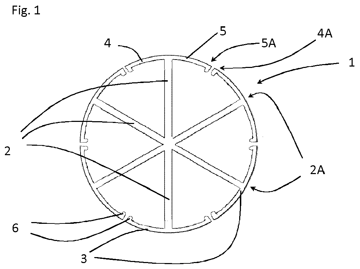

In der Fig. 1 ist eine erfindungsgemäße Stützhülse 1 in unbelastetem Zustand in einer Draufsicht gezeigt. Die Stützhülse 1 weist gleichmäßig verteilte Stützrippen 2 auf, wobei an jeder Stützrippe 2 an seinem radialen Ende 2A ein kreissegmentartig ausgebildetes Federsegment 3 angeordnet ist. Die Federsegmente 3 sind mittig an den jeweiligen Stützrippen 2 angeordnet und bilden dadurch jeweils zwei Federarme 4 und 5. Jedes Federsegment 5 und 5 weist an seinen in Umfangsrichtung gesehen beiden Enden 4A und 5A nach Innen abgewinkelte Endsegmente 6 auf. Die Endsegmente 6 sind ihrem jeweiligen benachbarten Ende 5A sowie 4A zugewandt und sind in Umfangsrichtung von diesen beabstandet.

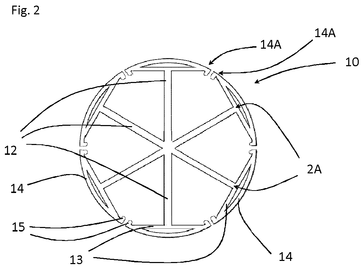

In der Fig. 2 ist eine erfindungsgemäße Stützhülse 10 mit gleichmäßig verteilten Stützrippen 12 ebenfalls in einer Draufsicht gezeigt. Die Stützrippen 12 tragen an ihren jeweiligen radialen Enden 12A sekantenartig ausgebildete Stützfüße 13, an denen jeweils kreissegmentartig ausgebildeten Federsegmenten 14 angeordnet sind. Jedes Federsegment 14 weist an seinen in Umfangsrichtung gesehen beiden Enden 14A nach Innen abgewinkelte Endsegmente 16 auf. Die Endsegmente 15 sind in Umfangsrichtung von ihren jeweiligen Nachbarsegmenten beabstandet.

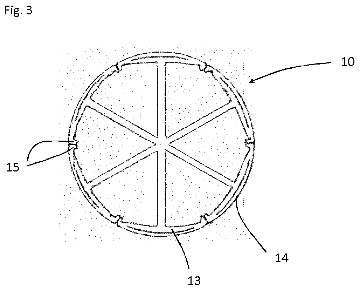

In der Fig. 3 ist die Stützhülse 10 gemäß Fig. 2 in belastetem Zustand gezeigt. Ein Ladeluftrohr mit Spannring ist auch hier nicht dargestellt. Durch die radiale Belastung sind sowohl die Stützfüße 13 als auch die Federsegmente 14 radial nach Innen verformt. Dabei stoßen benachbarte Endsegmente 15 jeweils zusammen. Durch die Abwinkelung der Endsegmente 15 ist ein Übereinanderschieben der Federsegmente 14 ausgeschlossen.

Durch die Erfindungsgemäße Lösung ist sowohl ein fester Halt der Stützhülsen in einem Ladeluftrohr in unbelastetem Zustand als auch eine steife, das unzulässige Zusammenpressen von Ladeluftrohren verhindernde Stützhülse bei Belastung gegeben.

### Bezugszeichenliste

### (Teil der Beschreibung)

- 1: Stützhülse
- 2: Stützrippen der Stützhülse 1
- 2A: radiale Enden der Stützrippen 2
- 3: Federsegmente an den Stützrippen 3
- 4, 5: Federarme der Federelemente 3
- 4A, 5A: Enden der Federarme 4, 5
- 6: Endsegmente der Federelemente 4, 5
- 10: Stützhülse
- 12: Stützrippen der Stützhülse 10
- 12A: radiale Enden der Stützrippen 12
- 13: Stützfüße an der Stützrippen 12
- 14: Federsegmente
- 14A: Enden der Federsegmente 14
- 16: Endsegmente der Federelemente 14

## Patentansprüche

1. Verbindungsanordnung für Fluidleitungen, aufweisend ein Ladeluftrohr und mindestens eine Stützhülse (1) aus Kunststoff, wobei die Stützhülse (1) speichenartige, radial nach außen weisende Stützrippen (2, 12) aufweist, wobei die Stützrippen (2, 12) der Stützhülse (1) an ihren radialen Außenenden (2A, 12A) federnde Stützbereiche (3, 14) aufweisen, **dadurch gekennzeichnet, dass** die federnden Stützbereiche (3) als kreissegmentartig ausgebildete Federsegmente (3) ausgebildet sind, wobei jedem Federsegment (3) ein Stützrippenende (2A) zugeordnet ist und das Stützrippenende (2A) mittig an dem Federsegment (3) angreift, so dass jedes Federsegment (3) zwei Federarme (4, 5) ausbildet.

2. Verbindungsanordnung nach Anspruch 1, **dadurch gekennzeichnet, dass** die kreissegmentartigen Federsegmente (14) jeweils mit einem sekantenartigen geraden Stützfuß (13) verstärkt sind, wobei jeder Stützfuß (13) an jeweils einem Stützrippenende (12A) angeordnet ist und jeweils an den in Umfangsrichtung gesehenen Enden (14A) jeweils mit einem Federsegment (14) verbunden ist, so dass zwischen Stützfuß (13) und Federsegment (14) ein in radialer Ausdehnung sich von Null bis zu einem vorbestimmten Scheitelwert ändernder Zwischenraum ausbildbar ist.

3. Verbindungsanordnung nach Anspruch 1 oder 2, **dadurch gekennzeichnet, dass** an jedem Federsegment (3, 14) an jedem seiner in Umfangsrichtung gesehenen Enden (4A, 5A, 14A) ein nach radial Innen abgewinkeltes Endsegment (6, 16) vorbestimmter Länge ausgebildet ist.

4. Verbindungsanordnung nach mindestens einem der Ansprüche 1 bis 3, **dadurch gekennzeichnet, dass** die Stützhülse (1) als Spritzgußteil hergestellt ist.

5. Verbindungsanordnung nach mindestens einem der Ansprüche 1 bis 3, **dadurch gekennzeichnet, dass** die Stützhülse (1) aus verschiedenen Kunststoffarten ausgebildet ist.

6. Verbindungsanordnung nach Anspruch 5, **dadurch gekennzeichnet, dass** die Stützrippen (2, 12) der Stützhülse (1, 10) aus einem gegenüber den federnden Stützbereichen (3, 14) höherfesten Kunststoff ausgebildet sind.

7. Verbindungsanordnung nach Anspruch 5 oder 6, **dadurch gekennzeichnet, dass** die Stützhülse (1) mittels des 3D-Druckes hergestellt ist.

## Claims

1. Connecting arrangement for fluid lines, having a charge-air pipe and at least one supporting sleeve (1) composed of plastic, wherein the supporting sleeve (1) has spoke-like, radially outwardly pointing supporting ribs (2, 12), wherein the supporting ribs (2, 12) of the supporting sleeve (1) have resilient supporting regions (3, 14) at their radial outer ends (2A, 12A), **characterized in that** the resilient supporting regions (3) are in the form of circular-segment-like spring segments (3), wherein each spring segment (3) is assigned a supporting-rib end (2A) and the supporting-rib end (2A) acts centrally on the spring element (3), so that each spring element (3) forms two spring arms (4, 5).

2. Connecting arrangement according to Claim 1, **characterized in that** the circular-segment-like spring segments (14) are each reinforced by a secant-like, straight supporting foot (13), wherein each supporting foot (13) is arranged on in each case one supporting-rib end (12A) and is in each case connected to a spring segment (14), in each case at the ends (14A) as seen in a circumferential direction, so that, between supporting foot (13) and spring segment (14), there is able to be formed an interspace which, in terms of radial extent, varies from zero to a predetermined apex value.

3. Connecting arrangement according to Claim 1 or 2, **characterized in that** a radially inwardly angled end segment (6, 16) of predetermined length is formed on each spring segment (3, 14) at each of its ends as seen in the circumferential direction (4A, 5A, 14A).

4. Connecting arrangement according to at least one of Claims 1 to 3, **characterized in that** the supporting sleeve (1) is produced as an injection-moulded part.

5. Connecting arrangement according to at least one of Claims 1 to 3, **characterized in that** the supporting sleeve (1) is formed from different types of plastic.

6. Connecting arrangement according to Claim 5, **characterized in that** the supporting ribs (2, 12) of the supporting sleeve (1, 10) are formed from a plastic which is of higher strength than the resilient supporting regions (3, 14).

7. Connecting arrangement according to Claim 5 or 6, **characterized in that** the supporting sleeve (1) is produced by means of 3D printing.

## Revendications

1. Agencement de liaison pour conduites de fluide, présentant un tuyau d'air de suralimentation et au moins une douille de support (1) en matière plastique, la douille de support (1) présentant des nervures de support (2, 12) en forme de rayons, orientées radialement vers l'extérieur, les nervures de support (2, 12) de la douille de support (1) présentant, à leurs extrémités extérieures radiales (2A, 12A), des zones de support élastiques (3, 14), **caractérisé en ce que** les zones de support élastiques (3) sont réalisées sous forme de segments élastiques (3) réalisés en forme de segments de cercle, une extrémité de nervure de support (2A) étant associée à chaque segment élastique (3) et l'extrémité de nervure de support (2A) s'engageant au centre du segment élastique (3), de telle sorte que chaque segment élastique (3) réalise deux bras élastiques (4, 5).

2. Agencement de liaison selon la revendication 1, **caractérisé en ce que** les segments élastiques (14) en forme de segments de cercle sont renforcés chacun par un pied de support (13) droit en forme de sécante, chaque pied de support (13) étant agencé à une extrémité de nervure de support (12A) respective et étant relié à un segment élastique (14) respectif aux extrémités (14A) respectives vues dans la direction périphérique, de telle sorte qu'un espace intermédiaire variant en extension radiale de zéro à une valeur de crête prédéterminée peut être réalisé entre le pied de support (13) et le segment élastique (14).

3. Agencement de liaison selon la revendication 1 ou 2, **caractérisé en ce qu'**un segment d'extrémité (6, 16) de longueur prédéterminée, coudé radialement vers l'intérieur, est réalisé sur chaque segment élastique (3, 14) à chacune de ses extrémités (4A, 5A, 14A) vues dans la direction périphérique.

4. Agencement de liaison selon au moins l'une quelconque des revendications 1 à 3, **caractérisé en ce que** la douille de support (1) est fabriquée sous forme de pièce moulée par injection.

5. Agencement de liaison selon au moins l'une quelconque des revendications 1 à 3, **caractérisé en ce que** la douille de support (1) est réalisée à partir de différents types de matière plastique.

6. Agencement de liaison selon la revendication 5, **caractérisé en ce que** les nervures de support (2, 12) de la douille de support (1, 10) sont réalisées en une matière plastique plus résistante que les zones de support élastiques (3, 14).

7. Agencement de liaison selon la revendication 5 ou 6, **caractérisé en ce que** la douille de support (1) est fabriquée au moyen de l'impression 3D.
